# FASCICULE DE BREVET EUROPEEN

(11) **EP 2 791 794 B1**
(45) Date de publication et mention de la délivrance du brevet: **11.07.2018**
(21) Numéro de dépôt: 12810379.3
(22) Date de dépôt: 07.12.2012
(51) Int. Cl.: G06F 9/445, G06F 8/61

(54) **PROCEDE DE GESTION D'UNE APPLICATION REFERENCEE PAR UN DISPOSITIF**
VERFAHREN ZUR VERWALTUNG EINER ANWENDUNG REFERENZIERT VON EINEM GERÄT
METHOD TO MANAGE AN APPLICATION REFERRED TO BY A DEVICE

(30) Priorité: 16.12.2011 FR 1161772
(43) Date de publication de la demande: 22.10.2014
(73) Titulaire: Orange, 75015 Paris (FR)
(72) Inventeur: LACHARME, Sandrine, F-22300 Lannion (FR); SEUREAU, Cédric, F-22300 Lannion (FR)
(74) Mandataire: Delumeau, François Guy
(86) Numéro de dépôt international: PCT/FR2012/052846
(87) Numéro de publication internationale: WO 2013/088036

(56) Documents cités:
- EP-A1- 1 527 392
- WO-A2-2009/050617
- CA-A1- 2 267 549
- US-A1- 2003 032 417
- US-A1- 2005 021 917
- US-A1- 2005 034 129

## Description

### Arrière-plan de l'invention

La présente invention se situe dans le domaine des dispositifs électroniques.

Elle s'applique en particulier, mais de façon non limitative, aux dispositifs électroniques à usage domestique et ayant des capacités de stockage relativement limitées.

Elle s'applique en particulier aux dispositifs faisant passerelle entre un réseau domestique et un réseau opérateur, aux Set-top box faisant l'interface entre un réseau de distribution de contenu télévisuel et un téléviseur, et aux consoles de jeu.

De nombreux terminaux permettent aujourd'hui aux utilisateurs de télécharger ou d'installer de nouvelles applications. Malheureusement, dans l'état actuel de la technique, lorsque les ressources du terminal sont insuffisantes pour le stockage et/ou la bonne exécution d'une application, l'utilisateur doit désinstaller une application du terminal ou plus généralement supprimer des données contenues dans le terminal pour dégager une mémoire suffisante pour la nouvelle application.

Cette situation n'est pas satisfaisante.

Un des buts de l'invention est de remédier aux insuffisances de l'état de la technique.

Le document US 2003/032417 A1 décrit un dispositif sans fil comprenant plusieurs applications exécutables, chaque application ayant des composants et des données associées. Au cas où le dispositif n'a pas de ressources suffisantes pour accueillir le téléchargement d'une nouvelle application, le dispositif supprime de façon sélective un ou plusieurs composants, sans perdre des données associées, afin de libérer des ressources.

### Objet et résumé de l'invention

Ainsi, et selon un premier aspect, l'invention concerne un procédé de gestion d'au moins une application référencée par un dispositif, ce procédé comportant une étape de suppression de données d'exécution de l'application, les données d'exécution comprenant au moins une partie du contexte d'exécution de ladite au moins une partie du contexte d'exécution de ladite au moins une application et ces données d'exécution ayant été stockées sur un équipement distant, et une étape de téléchargement de données d'exécution de ladite application à partir dudit équipement distant par un deuxième dispositif.

Corrélativement, l'invention concerne un dispositif comportant des moyens de suppression de données d'exécution d'une application référencée sur ce dispositif, ces données d'exécution ayant été stockées sur un équipement distant.

Le dispositif selon l'invention peut être un terminal.

L'invention permet ainsi de libérer de la place dans le terminal pour permettre l'installation ou l'exécution d'une autre application, sans perdre les données d'exécution supprimées, celles-ci pouvant être récupérées auprès de l'équipement distant.

Dans un mode particulier de réalisation de l'invention, le procédé de gestion selon l'invention comporte une étape de sauvegarde de données d'exécution de l'application dans l'équipement distant avant de les supprimer.

Cette sauvegarde n'est pas nécessaire si les données d'exécution sont déjà mémorisées par l'équipement distant.

Au sens de la demande de brevet, l'équipement distant peut être relié au dispositif selon l'invention par tout type de réseau, notamment par le réseau d'un opérateur de télécommunication ou par un réseau local, par exemple un réseau domestique.

En ce sens, l'invention se situe dans le domaine du "Cloud Compunting", et propose, de façon originale, d'utiliser les ressources du "Cloud" pour sauvegarder des données d'exécution d'applications.

Dans un mode préféré de réalisation, le procédé de gestion selon l'invention comporte une étape de mise à jour d'un lien pointant sur les données d'exécution dans une mémoire du dispositif ou dans l'équipement distant.

Cette caractéristique permet de retrouver facilement les données d'exécution qu'elles soient sauvegardées localement dans le dispositif ou dans l'équipement distant pour libérer de la place.

Dans un mode de réalisation, les données d'exécution mentionnées ci-dessus comportent au moins une partie du code de l'application.

Par exemple, dans un mode particulier de réalisation, le procédé de gestion selon l'invention comporte :
- une étape de réception d'une requête pour installer une première application dans le dispositif ;
- une étape de désinstallation d'une deuxième application du dispositif ; et
- une étape d'installation de la première application dans le dispositif.

Dans un mode de réalisation, les données d'exécution mentionnées ci-dessus comportent au moins une partie du contexte d'exécution de l'application.

L'invention propose ainsi de sauvegarder, dans un équipement distant, le contexte d'exécution d'une application exécutable par le dispositif, ce contexte étant téléchargé par le dispositif uniquement lorsque cette application doit être exécutée.

L'invention permet ainsi d'éviter d'occuper de la mémoire par le contexte d'exécution d'une application qui n'est pas en cours d'exécution.

Dans cette demande de brevet la notion "contexte d'exécution" désigne l'image d'une application à un instant donné, autrement dit l'ensemble des variables et registres de mémoire connus de l'application à cet instant donné.

Conformément à cet aspect de l'invention, l'intégralité du contexte d'exécution peut être sauvegardée sur un équipement distant, ou seulement une partie, cette deuxième option permettant de diminuer le temps nécessaire au téléchargement du contexte d'exécution par le dispositif avant d'exécuter l'application.

Par exemple, le procédé de gestion selon l'invention comporte une étape d'exécution de l'application, le contexte d'exécution de l'application, au cours de son exécution, étant sauvegardé dans une zone mémoire dudit dispositif; et - au moins une étape d'envoi d'au moins une partie de cette zone mémoire à l'équipement distant pour stocker sur l'équipement distant au moins une partie dudit contexte d'exécution.

Dans un mode de réalisation, le procédé d'exécution selon l'invention comporte :
- une étape de téléchargement d'un contexte d'exécution de l'application à partir de l'équipement distant ;
- une étape de sauvegarde de ce contexte dans une zone mémoire du dispositif ;
- et une étape d'exécution de l'application est effectuée en repartant du contexte sauvegardé dans la zone mémoire,.

Dans un mode particulier de réalisation de l'invention, la zone mémoire dans laquelle on enregistre le contexte d'une application est une zone réservée pour cette application, c'est-à-dire étanche aux autres applications.

On peut par exemple utiliser à cet effet une zone connue de l'homme du métier sous le terme "bac à sable" (en anglais "sandbox"), une telle zone permettant de définir un environnement d'exécution propre et sécurisé pour chaque application, c'est-à-dire étanche aux autres applications.

Les caractéristiques et avantages du procédé de gestion mentionnés ci-dessus peuvent être transposés au dispositif ou au terminal selon l'invention.

Dans un mode particulier de réalisation, les différentes étapes du procédé d'exécution et les différentes étapes de procédé de gestion sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé d'exécution ou les étapes de procédé de gestion tels que mentionnés ci-dessus.

L'invention vise aussi un programme d'ordinateur sur un support d'informations, ce programme étant susceptible d'être mis en oeuvre par un ordinateur, ce programme comportant des instructions adaptées à la mise en oeuvre des étapes du procédé d'exécution ou de procédé de gestion tels que mentionnés ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessus en référence aux dessins qui en illustrent un exemple de réalisation dépourvu du caractère limitatif.

Sur les figures :
- la figure 1 représente, sous forme d'organigramme, les principales étapes d'un procédé d'exécution et les principales d'un procédé de gestion conformes à un mode particulier de réalisation de l'invention ; et
- la figure 2 représente de façon schématique, un dispositif conforme à un mode particulier de réalisation de l'invention.

### Description détaillée de l'invention

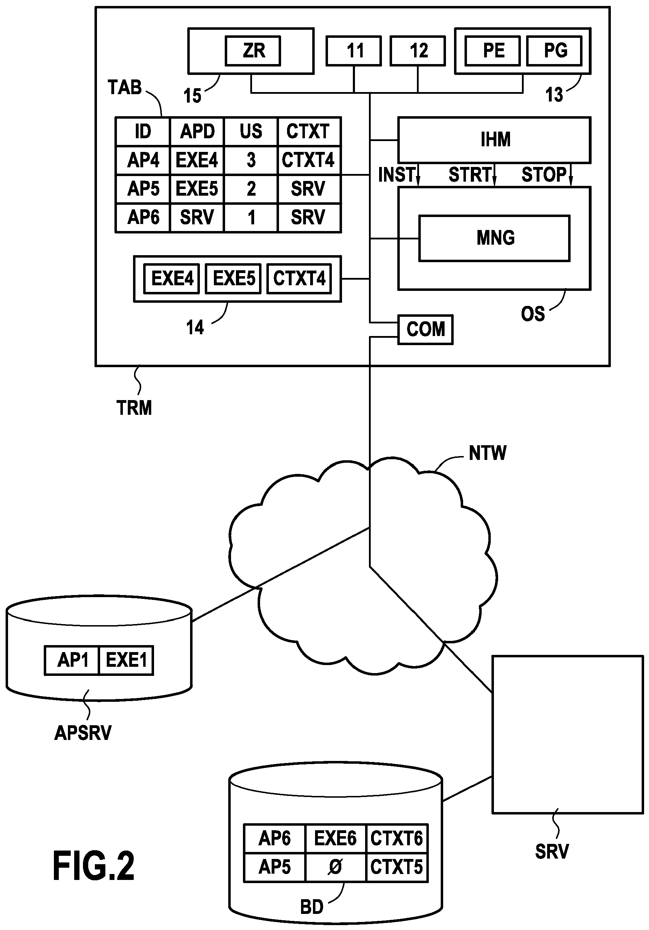

En référence à **la** **figure 2****,** on a représenté un dispositif TRM conforme à l'invention.

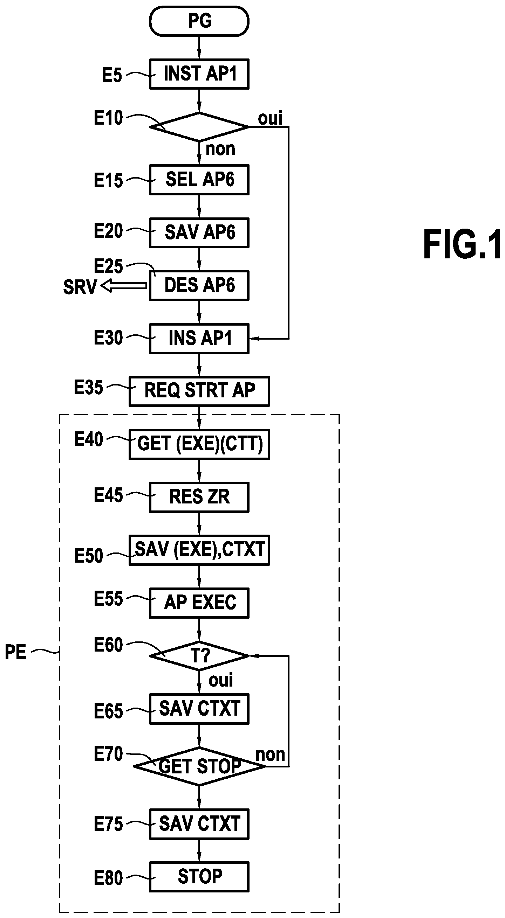

Ce dispositif a l'architecture matérielle d'un ordinateur. Il comporte notamment un processeur 11, une mémoire vive de type RAM 12 et une mémoire morte de type ROM 13. Cette mémoire morte de type ROM 13 constitue un support au sens de l'invention ; elle enregistre un programme d'ordinateur PG qui comprend des instructions pour l'exécution des étapes du procédé de gestion représentées à la figure 1.

Ce dispositif TRM comporte un système d'exploitation OS et des moyens de communication COM permettant au dispositif de communiquer, via un réseau NTW, avec un serveur SRV et un serveur d'application APSRV.

Dans l'exemple de réalisation décrit ici, le dispositif TRM comporte une mémoire non volatile réinscriptible 14 dans lequel sont mémorisés le code exécutable EXE4 et EXE5 de deux applications AP4, AP5 et le contexte d'exécution CTXT4 de l'application AP4.

Le code exécutable et le contexte d'exécution d'une application constituent des données d'exécution de cette application.

Le dispositif TRM comporte également une table TAB dans lequel sont mémorisés les états de plusieurs applications à savoir, dans cet exemple, l'état de trois applications AP4, AP5 et AP6 et un lien pointant sur des données d'exécution de ces applications, soit dans une mémoire du dispositif TRM ou dans le serveur distant SRV.

Dans cet exemple, la table TAB représente le fait que :
- le code EXE4 et le contexte CTXT4 de l'application AP4 sont mémorisés dans la mémoire 14 ;
- le code EXE5 de l'application AP5 est mémorisé dans la mémoire 14, le contexte CTXT5 de cette application étant sauvegardé sur le serveur distant SRV ; et que
- le code EXE6 et le contexte CTXT6 de l'application AP6 sont sauvegardés dans le serveur distant SRV.

Dans cet exemple, le dispositif TRM comporte un module MNG de gestion des applications référencées par ce dispositif et une interface homme-machine IHM.

Dans cet exemple, le serveur distant SRV mémorise une base de données MD comportant le code EXE6 et le contexte CTXT6 de l'application AP6 et le contexte CTXT5 de l'application AP5.

Le serveur d'application APSRV est un serveur auprès duquel le dispositif TRM peut télécharger une nouvelle application AP1 de code EXE1.

Les étapes E10 à E80 de la **figure 1** représentent les principales étapes d'un procédé de gestion conforme à l'invention.

On supposera, au cours d'une étape E5, que l'utilisateur du dispositif TRM souhaite installer l'application AP1 disponible auprès de serveur APSRV.

A cet effet, l'utilisateur utilise l'interface homme-machine IHM du dispositif et une commande INST d'installation est émise par cette interface homme-machine vers le module de gestion MNG du terminal.

Au cours d'une étape E10, le module de gestion MNG vérifie si la mémoire 14 a une capacité suffisante pour accueillir le code EXE1 de l'application AP1.

Si tel est le cas, le résultat du test E10 est positif et l'application est téléchargée par les moyens de communication COM et installée dans la mémoire 14.

Un nouveau lien est créé dans le tableau TAB pour indiquer que l'exécutable EXE1 est sauvegardé dans la mémoire 14.

Si la mémoire flash 14 ne permet pas d'installer le code EXE1 de l'application AP1, le résultat du test E10 est négatif.

Ce test est alors suivi par une étape E15 au cours de laquelle le module de gestion MNG sélectionne, parmi les applications installées dans le dispositif, l'application la moins fréquemment utilisée.

A cet effet, dans l'exemple de réalisation décrit ici, la table TAB comporte une colonne d'usage « US » comportant un indicateur d'usage de chacune des applications.

Dans l'exemple de réalisation décrit ici, nous supposerons que l'application la moins utilisée est l'application AP6.

Le code EXE6 et le contexte CXT6 de cette application sont sauvegardés, via le réseau NTW, dans la base de données BD du serveur SRV au cours d'une étape E20.

L'application AP6 est désinstallée de la mémoire flash du dispositif 14 au cours d'une étape E25. Les liens vers les données d'exécution de l'application AP6 sont mis à jour pour pointer vers le serveur SRV.

La figure 2 représente l'état du tableau TAB, de la base de données BD et de la mémoire 14 après cette sauvegarde et cette désinstallation.

Au cours d'une étape E30, l'application AP1 est téléchargée par les moyens de communication COM du dispositif TRM à partir du serveur d'application APSRV et installée dans la mémoire 14.

Nous supposerons maintenant, que l'utilisateur du dispositif TRM utilise l'interface homme-machine IHM pour lancer (E35) une application (commande STRT).

Si ceux-ci ne sont pas mémorisés dans la mémoire 14 du dispositif, le module de gestion MNG télécharge, en suivant les liens de l'application de cette application, au cours d'une étape E40, l'exécutable EXE et/ou le contexte CTXT de l'application à partir du serveur SRV via le réseau NTW.

Au cours d'une étape E45, le module de gestion MNG réserve, dans une mémoire 15 du dispositif TRM, une zone réservée ZR pour cette application.

Il sauvegarde l'exécutable EXE et/ou le contexte CTXT de l'application dans la zone réservée ZR au cours d'une étape E50. Les liens sont mis à jour.

Puis, au cours d'une étape E55, l'application est exécutée.

Dans l'exemple de réalisation décrit ici, le module de gestion MNG sauvegarde, dans le serveur distant SRV, le contexte d'exécution CTXT de l'application en cours de l'exécution régulièrement, toutes les T secondes.

A cet effet, le procédé d'exécution selon l'invention vérifie, au cours d'un test E60, si la durée T a expiré.

Si tel est le cas, le dispositif TRM envoie, au cours d'une étape E65, tout ou partie du contexte CTXT de l'application en cours d'exécution au serveur distant SRV. Les liens relatifs à ce contexte sont mis à jour.

Puis, au cours d'une étape E70 le terminal vérifie si l'utilisateur a demandé, au moyen de l'interface homme-machine IHM, l'arrêt de l'application (commande STOP).

Si tel est le cas, le terminal TRM sauvegarde une nouvelle fois le contexte d'exécution de l'application dans le serveur distant au cours d'une étape E75 et arrête l'exécution de l'application au cours d'une étape E80.

## Revendications

1. Procédé de gestion d'au moins une application (AP4-AP6) référencée par un dispositif (TRM), le procédé comportant, suite à un résultat négatif d'une vérification (E10) de la capacité de la mémoire (14) du dispositif (TRM) à acquérir un code d'une nouvelle application (AP1) :
• une étape de sauvegarde (E20) de données d'exécution de ladite application (AP4-AP6) dans un équipement distant (SRV) ;
• cette étape étant antérieure à une étape (E25) de suppression desdites données d'exécution de ladite application (AP4-AP6), lesdites données d'exécution comportant au moins une partie du contexte d'exécution de ladite application (AP4-AP6), ledit contexte d'exécution comportant l'ensemble des variables et registres de mémoire connus de l'application (AP4-AP6) à un instant donné ; et
• suite à un lancement (E35) de l'application (AP4-AP6), si lesdites données d'exécution ne sont pas mémorisées dans la mémoire (14) du dispositif (TRM), une étape de téléchargement (E40) desdites données d'exécution de ladite application (AP4-AP6) à partir dudit équipement distant (SRV).

2. Procédé de gestion selon la revendication 1, **caractérisé en ce qu'**il comporte une étape de mise à jour d'un lien pointant sur lesdites données d'exécution dans une mémoire dudit dispositif ou dans l'équipement distant.

3. Procédé de gestion selon la revendication 1, **caractérisé en ce que** lesdites données d'exécution comportent au moins une partie du code de ladite application.

4. Procédé de gestion selon la revendication 3, **caractérisé en ce qu'**il comporte :
- une étape (E5) de réception d'une requête pour installer une première application (AP1) dans le dispositif (TRM) ;
- une étape de désinstallation (E25) d'une deuxième application (AP2) du dispositif ; et
- une étape (E30) d'installation de la première application dans ledit dispositif.

5. Procédé de gestion selon la revendication 1 **caractérisé en ce qu'**il comporte une étape (E55) d'exécution de ladite application, le contexte d'exécution de ladite application, au cours de son exécution, étant sauvegardé dans une zone mémoire (ZR) dudit dispositif; et
- au moins une étape (E65, E75) d'envoi d'au moins une partie de ladite zone mémoire audit équipement distant pour stocker sur l'équipement distant au moins une partie dudit contexte d'exécution.

6. Procédé de gestion selon la revendication 1, **caractérisé en ce qu'**il comporte :
- une étape (E40) de téléchargement d'un contexte d'exécution (CTXT) de ladite application à partir de l'équipement distant ;
- une étape (E50) de sauvegarde dudit contexte dans une zone mémoire (ZR) dudit dispositif ; et
- une étape (E55) d'exécution de ladite application est effectuée en repartant du contexte sauvegardé dans ladite zone mémoire.

7. Procédé de gestion selon la revendication 5 ou 6, **caractérisé en ce que** ladite zone mémoire (ZR) est une zone réservée pour ladite application, étanche aux autres applications.

8. Dispositif (TRM), **caractérisé en ce qu'**il comporte:
- des moyens de sauvegarde configurés pour sauvegarder, dans un équipement distant (SRV), des données d'exécution d'au moins une application (AP4-AP6) référencée par le dispositif (TRM), suite à un résultat négatif d'une vérification de la capacité de la mémoire (14) du dispositif (TRM) à acquérir un code d'une nouvelle application (AP1);
- des moyens de suppression desdites données d'exécution, lesdites données d'exécution comportant au moins une partie du contexte d'exécution de ladite application (AP4-AP6), ledit contexte d'exécution comportant l'ensemble des variables et registres de mémoire connus de l'application (AP4-AP6) à un instant donné ; et
- des moyens de téléchargement configurés pour télécharger, suite à un lancement de l'application (AP4-AP6), lesdites données d'exécution de ladite application (AP4-AP6) à partir dudit équipement distant (SRV), si lesdites données d'exécution ne sont pas mémorisées dans la mémoire (14) du dispositif (TRM).

9. Dispositif de gestion selon la revendication 8, **caractérisé en ce qu'**il comporte des moyens de mise à jour d'un lien pointant sur lesdites données d'exécution dans une mémoire dudit dispositif ou dans l'équipement distant.

10. Programme d'ordinateur (PG) comportant des instructions pour l'exécution des étapes d'un procédé de gestion selon l'une quelconques des revendications 1 à 7 lorsque ledit programme est exécuté par un ordinateur.

11. Support d'enregistrement (13) lisible par un ordinateur sur lequel est enregistré un programme d'ordinateur (PG) comprenant des instructions pour l'exécution des étapes du procédé de gestion selon l'une quelconques des revendications 1 à 7.

## Patentansprüche

1. Verfahren zur Verwaltung mindestens einer Anwendung (AP4-AP6), die von einer Vorrichtung (TRM) referenziert ist, wobei das Verfahren nach einem negativen Resultat einer Überprüfung (E10) der Kapazität des Speichers (14) der Vorrichtung (TRM) zur Erfassung eines Codes einer neuen Anwendung (AP1) umfasst:
* einen Schritt des Speicherns (E20) der Ausführungsdaten der Anwendung (AP4-AP6) in einer entfernten Ausrüstung (SRV);
* wobei dieser Schritt vor einem Schritt (E25) des Löschens der Ausführungsdaten der Anwendung (AP4-AP6) erfolgt, wobei die Ausführungsdaten mindestens einen Teil des Ausführungskontextes der Anwendung (AP4-AP6) umfassen, wobei der Ausführungskontext die Gesamtheit der bekannten Variablen und Speicherregister der Anwendung (AP4-AP6) zu einem gegebenen Zeitpunkt umfasst; und
* nach einem Start (E35) der Anwendung (AP4-AP6), wenn die Ausführungsdaten nicht in dem Speicher (14) der Vorrichtung (TRM) gespeichert sind, einen Schritt des Herunterladens (E40) der Ausführungsdaten der Anwendung (AP4-AP6) von der entfernten Ausrüstung (SRV).

2. Verwaltungsverfahren nach Anspruch 1, **dadurch gekennzeichnet, dass** es einen Schritt der Aktualisierung eines Links umfasst, der auf die Ausführungsdaten in einem Speicher der Vorrichtung oder in der entfernten Ausrüstung zeigt.

3. Verwaltungsverfahren nach Anspruch 1, **dadurch gekennzeichnet, dass** die Ausführungsdaten mindestens einen Teil des Codes der Anwendung umfassen.

4. Verwaltungsverfahren nach Anspruch 3, **dadurch gekennzeichnet, dass** es umfasst:
- einen Schritt (E5) des Empfangs einer Anfrage nach Installation einer ersten Anwendung (AP1) in der Vorrichtung (TRM);
- einen Schritt der Deinstallation (E25) einer zweiten Anwendung (AP2) der Vorrichtung; und
- einen Schritt (E30) der Installation der ersten Anwendung in der Vorrichtung.

5. Verwaltungsverfahren nach Anspruch 1, **dadurch gekennzeichnet, dass** es einen Schritt (E55) der Ausführung der Anwendung umfasst, wobei der Ausführungskontext der Anwendung während ihrer Ausführung in einer Speicherzone (ZR) der Vorrichtung geschützt ist; und
- mindestens einen Schritt (E65, E75) des Sendens mindestens eines Teils der Speicherzone an die entfernte Ausrüstung, um in der entfernten Ausrüstung mindestens einen Teil des Ausführungskontextes zu speichern.

6. Verwaltungsverfahren nach Anspruch 1, **dadurch gekennzeichnet, dass** es umfasst:
- einen Schritt (E40) des Herunterladens eines Ausführungskontextes (CTXT) der Anwendung von der entfernten Ausrüstung;
- einen Schritt (E50) des Speicherns des Kontextes in einer Speicherzone (ZR) der Vorrichtung; und
- einen Schritt (E55) der Ausführung der Anwendung, wobei wieder von dem in der Speicherzone gespeicherten Kontext ausgegangen wird.

7. Verwaltungsverfahren nach Anspruch 5 oder 6, **dadurch gekennzeichnet, dass** die Speicherzone (ZR) eine für die Anwendung reservierte, für andere Anwendungen nicht zugängliche Zone ist.

8. Vorrichtung (TRM), **dadurch gekennzeichnet, dass** sie umfasst:
- Speichermittel, die eingerichtet sind, um in einer entfernten Ausrüstung (SRV) Ausführungsdaten mindestens einer von der Vorrichtung (TRM) referenzierten Anwendung (AP4-AP6) nach einem negativen Resultat einer Überprüfung der Kapazität des Speichers (14) der Vorrichtung (TRM) zur Erfassung eines Codes einer neuen Anwendung (AP1) zu speichern;
- Mittel zum Löschen der Ausführungsdaten, wobei die Ausführungsdaten mindestens einen Teil des Ausführungskontextes der Anwendung (AP4-AP6) umfassen, wobei der Ausführungskontext die Gesamtheit der bekannten Variablen und Speicherregister der Anwendung (AP4-AP6) zu einem gegebenen Zeitpunkt umfasst; und
- Mittel zum Herunterladen, die eingerichtet sind, um nach einem Start der Anwendung (AP4-AP6) die Ausführungsdaten der Anwendung (AP4-AP6) von der entfernten Ausrüstung (SRV) herunterzuladen, wenn die Ausführungsdaten nicht in dem Speicher (14) der Vorrichtung (TRM) gespeichert sind.

9. Verwaltungsvorrichtung nach Anspruch 8, **dadurch gekennzeichnet, dass** sie Mittel zur Aktualisierung eines Links umfasst, das auf die Ausführungsdaten in einem Speicher der Vorrichtung oder in der entfernten Ausrüstung zeigt.

10. Computerprogramm (PG), umfassend Anweisungen für die Ausführung der Schritte eines Verwaltungsverfahrens nach einem der Ansprüche 1 bis 7, wenn das Programm von einem Computer ausgeführt wird.

11. Aufzeichnungsträger (13), der von einem Computer lesbar ist, auf dem ein Computerprogramm (PG) gespeichert ist, umfassend Anweisungen für die Ausführung der Schritte des Verwaltungsverfahrens nach einem der Ansprüche 1 bis 7.

## Claims

1. Method for managing at least one application (AP4-AP6) referenced by a device (TRM), the method including, following a negative outcome of a verification (E10) of the capacity of the memory (14) of the device (TRM) to acquire a code of a new application (AP1):
• a step (E20) of saving execution data for said application (AP4-AP6) in a remote apparatus (SRV);
• this step being followed by a step (E25) of deleting said execution data for said application (AP4-AP6), said execution data including at least part of the execution context of said application (AP4-AP6), said execution context including all of the memory registers and variables known to the application (AP4-AP6) at a given instant; and
• following launching (E35) of the application (AP4-AP6), if said execution data are not stored in the memory (14) of the device (TRM), a step (E40) of downloading said execution data for said application (AP4-AP6) from said remote apparatus (SRV).

2. Management method according to Claim 1, **characterized in that** it includes a step of updating a link pointing to said execution data in a memory of said device or in the remote apparatus.

3. Management method according to Claim 1, **characterized in that** said execution data include at least part of the code of said application.

4. Management method according to Claim 3, **characterized in that** it includes:
- a step (E5) of receiving a request to install a first application (AP1) in the device (TRM);
- a step (E25) of uninstalling a second application (AP2) from the device; and
- a step (E30) of installing the first application in said device.

5. Management method according to Claim 1, **characterized in that** it includes a step (E55) of executing said application, the execution context of said application, during execution thereof, being saved in a memory zone (ZR) of said device; and
- at least one step (E65, E75) of sending at least part of said memory zone to said remote apparatus in order to store, at the remote apparatus, at least part of said execution context.

6. Management method according to Claim 1, **characterized in that** it includes:
- a step (E40) of downloading an execution context (CTXT) of said application from the remote apparatus;
- a step (E50) of saving said context in a memory zone (ZR) of said device; and
- a step (E55) of executing said application is performed starting from the context saved in said memory zone.

7. Management method according to Claim 5 or 6, **characterized in that** said memory zone (ZR) is a zone reserved for said application that is inaccessible to the other applications.

8. Device (TRM), **characterized in that** it includes:
- saving means configured to save, in a remote apparatus (SRV), execution data for at least one application (AP4-AP6) referenced by the device (TRM), following a negative outcome of a verification of the capacity of the memory (14) of the device (TRM) to acquire a code of a new application (AP1):
- means for deleting said execution data, said execution data including at least part of the execution context of said application (AP4-AP6), said execution context including all of the memory registers and variables known to the application (AP4-AP6) at a given instant; and
- downloading means configured to download, following launching of the application (AP4-AP6), said execution data for said application (AP4-AP6) from said remote apparatus (SRV) if said execution data are not stored in the memory (14) of the device (TRM).

9. Management device according to Claim 8, **characterized in that** it includes means for updating a link pointing to said execution data in a memory of said device or in the remote apparatus.

10. Computer program (PG) including instructions for executing the steps of a management method according to any one of Claims 1 to 7 when said program is executed by a computer.

11. Computer-readable recording medium (13) on which a computer program (PG) comprising instructions for executing the steps of the management method according to any one of Claims 1 to 7 is recorded.
